# EUROPÄISCHE PATENTSCHRIFT

(11) **EP 0 260 648 B1**
(45) Veröffentlichungstag und Bekanntmachung des Hinweises auf die Patenterteilung: **01.12.1993**
(21) Anmeldenummer: 87113439.1
(22) Anmeldetag: 15.09.1987
(51) Int. Cl.: C09B 67/48, C09B 5/62, C09D 7/00, C08K 5/34

(54) **Tetrachlorperylen-3,4,9,10-tetracarbonsäurediimidpigment und dessen Verwendung**
Tetrachloroperylene-3,4,9-10-tetracarboxylic acid diimide pigment and its use
Pigment du diimide de l'acide tétrachloropérylène-3,4,9,10-tétracarboxylique et son utilisation

(30) Priorität: 18.09.1986 DE 3631678
(43) Veröffentlichungstag der Anmeldung: 23.03.1988
(73) Patentinhaber: BASF Aktiengesellschaft, 67063 Ludwigshafen (DE)
(72) Erfinder: Henning, Georg, Dr., D-6700 Ludwigshafen (DE); Hahn, Erwin, Dr., D-6900 Heidelberg (DE); Hauser, Peter, Dr., D-6703 Limburgerhof (DE); Patsch, Manfred, Dr., D-6706 Wachenheim (DE)

(56) Entgegenhaltungen:
- EP-A- 0 081 766
- US-A- 4 431 806
- JAPANESE PATENTS GAZETTE, Sektion Ch, Woche X10, 14. April 1976, Klasse F, Seite 1, Zusammenfassung Nr. 17571X/10, Derwent Publications Ltd, Londen, GB; & JP-A-51 007 025 (MITSUBISHI CHEM. IND. K.K.) 21-01-1976

## Beschreibung

In der DE-PS 441 587 wird ein Verfahren zur Darstellung von Halogenierungsprodukten des Perylentetracarbonsäureimids und seiner Derivate beschrieben, bei dem die Chlorierung des Perylentetracarbonsäurediimids in Chlorsulfonsäure in Gegenwart von Jod durch Einleiten von gasförmigem Chlor erfolgt. Die dort beschriebene Tetrachlorstufe wurde als Küpenfarbstoff verwendet und durch einen Farbtonumschlag beim Seifen als solche identifiziert. Eine Anwendung des Produktes als Pigment ist nicht beschrieben und man erhält auch nur sehr trübe, dunkle Marrontöne mit schlechten Licht- und Wetterechtheiten, wenn man die Verbindung als Pigment verwendet. Nach röntgenographischen Untersuchungen handelt es sich um die α-Modifikation.

In der DE-OS 25 19 790 wird ein Chlorierungsverfahren beschrieben, bei dem als Katalysatoren aromatische Jodverbindungen angewendet werden. So wird z.B. im Beispiel 7 Perylen-3,4,9,10-tetracarbonsäurediimid in Gegenwart von Jodbenzol in Schwefelsäure mit Chlor umgesetzt. Man erhält so ein Dichlorprodukt, das bei der Anwendung im Lack dunkle Färbungen liefert.

Nach der EP-A 81 766, die Lichtsammelsysteme unter Verwendung von tetra-bis pentahalogenierten Perylentetracarbonsäurediimiden als Lichtwandler beschreibt, kommen nach den angegebenen Formeln sowohl ein 1,6,7,12-Tetrachlorperylen- als auch ein 2,5,8,11-Tetrachlorperylen-3,4,9,10-tetracarbonsäurediimid für diesen Verwendungszweck in Betracht. In den Beispielen kommen die an den Imidgruppen nicht substituierten Imide allerdings nicht vor, was nach der Anwendung der dort beschriebenen Imide verständlich ist, da nur gelöste Farbstoffe als Lichtwandler wirksam sind und Tetrachlorperylencarbonsäurediimide in den für diesen Zweck angewendeten Medien unlöslich sind.

Aus der JP-OS 21 429/1969 ist die Kondensation von gegebenenfalls halogeniertem Naphthalimid zu Perylentetracarbonsäurediimiden, die bis zu 4 Halogenatome enthalten können, bekannt. Nach dem Beispiel 2 wird 3,5-Dichlornaphthalimid kondensiert, wobei man nach allgemeiner Erfahrung nicht das 1,6,7,12-Tetrachlorprodukt erhält.

In der DE-OS 30 18 006 wird ein Verfahren zur Herstellung von Pigmenten der Perylen-3,4,9,10-tetracarbonsäurediimidreihe und ihre Verwendung beschrieben. Die dort erfindungsgemäß über eine Überführung des Pigments in das Sulfat und Hydrolyse zum Reinpigment erhaltenen Produkts zeichnen sich durch höchste Transparenz und Farbstärke aus und werden daher besonders für Metallic-Lackierungen vorgeschlagen. Das nach Beispiel 6 erhaltene Pigment, das 23,5 % Chlor enthält, ist speziell für diese Anwendung geeignet. Demgegenüber liefert dieses Pigment in Volltonlackierungen relativ trübe rote Farbtöne mit nur mäßigen Licht- und Wetterechtheiten. Nach dem Chlorgehalt von 23,5 %, der im Vergleich zur reinen Tetrachlorverbindung mit 26,9 % deutlich zu niedrig liegt, muß dieses Pigment eine Mischung aus verschieden chlorierten Verbindungen sein und die Koloristik und andere anwendungstechnische Eigenschaften (Echtheiten) spiegeln die Eigenschaften dieser Mischung wider. Dieses Pigment zeigt im Röntgendiagramm neben den Linien der β-Modifikation Fremdlinien, die das Vorhandensein anderer Kristallstrukturen in der Mischung belegen.

Aufgabe der Erfindung war es nun, ein Perylentetracarbonsäurediimidpigment bereitzustellen, das hochlicht- und wetterechte, brillante, rote Färbungen liefert.

Die Erfindung betrifft ein Tetrachlorperylen-3,4,9,10-tetracarbonsäurediimidpigment, das dadurch gekennzeichnet ist, daß es einen Gehalt von ≧ 85 Gew.% an der Tetrachlorverbindung der Formel 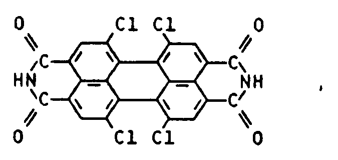
die zu ≧ 95 Gew.% in der β-Modifikation vorliegt und die im Röntgenspektrum Hauptlinien 2⊖ CuK_{α} bei 9,0, 13,3, 15,0, 16,8, 19,1, 21,5, 24,2, 25,4, 26,5, 27,0 und 27,5° aufweist.

Das neue Pigment gibt im Lack sehr brillante rote Färbungen, wie sie mit Pigmentmischungen aus unterschiedlich chlorierten Verbindungen und/oder Modifikationsmischungen nicht möglich sind. Weiterhin weisen die mit dem neuen Pigment hergestellten Färbungen sehr hohe Licht- und Wetterechtheiten auf. Auch nach sehr langer Belichtung und Bewitterung tritt weder Ausbleichen noch Nachdunkeln auf. Im Gegensatz dazu dunkeln Volltonlackierungen von Mischungen aus verschieden chlorierten Perylimiden bei der Bewitterung stark und Weißverschnittlackierungen bleichen relativ schnell aus. Ein entsprechender Effekt - schlechte Licht- und Wetterechtheiten - z.B. starkes Dunkeln - tritt auf, wenn das Pigment aus einem Gemisch der β- und α-Modifikation besteht.

Da die α-Modifikation meist in schlecht kristallisierter Form vorliegt, kann sie schon bei einem Anteil von ungefähr 10 % unter Umständen nicht mehr im Röntgendiagramm gefunden und damit nicht erkannt werden. Der Nachweis gelingt jedoch durch ein indirektes Verfahren, bei dem die Probe mehrere Tage bei Raumtemperatur in Xylol suspendiert wird. Dabei kristallisieren die α-Anteile zu einem Xyloladdukt, das eine andere Struktur und ein charakteristisches Röntgendiagramm zeigt und mikroskopisch an den deutlich vergrößerten Teilchen identifiziert werden kann. Eine entsprechende Reaktion tritt bei der β-Modifikation nicht auf. Das Deckvermögen des neuen Pigments, das bei Volltonlackierungen besonders wichtig ist, hat bei einer Teilchengröße von 0,3 bis 0,5 µm ein Maximum, während seine Farbstärke, die bei Lackierungen im Weißverschnitt und in Metallics besonders wichtig ist, erst mit abnehmender Teilchengröße voll wirksam wird.

Die Herstellung des 1,6,7,12-Tetrachlor-3,4,9,10-tetracarbonsäurediimids erfolgt in an sich bekannter Weise durch Einleiten von Chlor in eine Lösung des 3,4,9,10-Tetracarbonsäurediimids in konzentrierter Schwefelsäure. Dabei erfolgt die Chlorierung bei Temperaturen von 25 bis 40°C. Die Menge an 98 bis 100gew.%iger Schwefelsäure liegt bei der 8- bis 13-fachen, vorzugsweise bei der 10- bis 13-fachen Gewichtsmenge, bezogen auf zu chlorierendes Diimid. Die Halogenierung erfolgt zweckmäßigerweise unter Katalyse mit Alkalijodid, z.B. mit Natriumjodid, wobei während der Chlorierung der absublimierte bzw. verbrauchte Anteil durch mehrmaliges Nachsetzen von NaJ ergänzt wird. Der Endpunkt der Chlorierung wird zweckmäßigerweise durch Bestimmung des Gesamtchlorgehalts des Produktes an einer Probe ermittelt. Der Endpunkt der Chlorierung ist bei 26,7 bis 27,1 Gew.-% Chlor erreicht. In die erhaltene Lösung des Tetrachlordiimids wird dann Wasser eingetragen, wobei darauf zu achten ist, daß dabei keine Sulfatzwischenstufen entstehen. Dies wird dadurch erreicht, daß vor dem Chlorieren ein Verhältnis von Perylimid zu Schwefelsäure von etwa 1 : 13 Gew.-Teilen vorhanden war, die Temperatur beim Fällen nicht unter 20°C sinkt und beim Verdünnen der Bereich von 90-bis 82gew.%iger Schwefelsäure möglichst rasch durchschritten wird. D.h. dieser Bereich muß durch rasches Zugeben von Wasser unter gutem Durchmischen und intensiver Kühlung durchlaufen werden. Am Ende soll die Schwefelsäurekonzentration etwa 79 - 82 Gew.-%, vorzugsweise 81 Gew.% betragen (bezogen auf die Schwefelsäurephase). Bei Fällungstemperaturen zwischen 20 und 40°C, vorzugsweise zwischen 25 und 35°C, entsteht das Pigment in einer sehr feinteiligen Form bereits in der β-Modifikation. Durch Erwärmen des Gemisches auf 90 bis 120°C kann dieses rekristallisiert werden, bis die Teilchengröße bei 0,15 bis 0,5 µm liegt. Anschließend wird abfiltriert, das Filtergut zunächst mit 82gew.%iger Schwefelsäure und dann mit Wasser gewaschen.

Erwärmt sich das Gemisch beim Fällen auf Temperaturen >40°C, insbesondere auf 50 bis 70°C, dann erhält man die β-Modifikation von (I) in Form großer Teilchen. Diese können durch Zerkleinern und Rekristallisation in coloristisch wertvolle Pigmentformen überführt werden.

Zur Bestimmung des Endpunktes der Chlorierung wird eine Probe des Reaktionsgemisches auf Eiswasser ausgetragen, die Fällung filtriert, neutral gewaschen und getrocknet. An dem so erhaltenen Produkt wird der Gehalt an Chlor bestimmt. Das durch vollständige Fällung erhaltene Chlorperylentetracarbonsäurediimid weist nach der Analyse zwischen 75 und 92 Gew.-% an der 1,6,7,12-Tetrachlorverbindung auf. Demgegenüber weisen die durch Fraktionierung erhaltenen erfindungsgemäßen Pigmente einen Gehalt von >85, insbesondere von >89 Gew.-% an 1,6,7,12-Tetrachlorperylentetracarbonsäurediimid auf.

Die Bestimmung des Gehalts an der 1,6,7,12-Tetrachlorverbindung kann durch HPLC-Analyse erfolgen.

Für die Herstellung der feinteiligen, farbstarken Form des neuen Pigments mit einer Teilchengröße <0,3 µm wird nach der Fällung der β-Modifikation die Suspension nur auf 50 bis 90°C erwärmt und ein bis zwei Stunden bei dieser Temperatur gerührt.

Eine andere Möglichkeit, das neue Pigment herzustellen, besteht darin, daß die bei der beschriebenen Fällung des Pigments in der β-Modifikation anfallenden Teilchen isoliert werden und je nach Teilchengröße entweder direkt oder nach dem Zerkleinern in 80-83gew.%iger Schwefelsäure rekristallisiert werden.

Die folgenden Ausführungsbeispiele sollen die Erfindung zusätzlich erläutern. Die Prozentangaben beziehen sich auf das Gewicht.

### Beispiel 1

50 g Perylen-3,4,9,10-tetracarbonsäurediimid werden bei Raumtemperatur in 640 g 100%iger Schwefelsäure gelöst. Nun werden 0,9 g NaJ zugegeben und bei 30°C innerhalb von 9 Stunden 84 g Chlor eingeleitet. Nach 3 bzw. 6 Stunden werden jeweils weitere 0,9 g NaJ nachgesetzt. Nach beendeter Chlorierung werden bei 30°C unter guter Kühlung innerhalb von 10 Min. 160 g Wasser (25°C) zugetropft. Das erhaltene Gemisch wird dann auf 120°C erwärmt und 3 Stunden bei dieser Temperatur gerührt. Man läßt die Suspension auf 60°C abkühlen, saugt das Pigment ab und wäscht in Portionen mit insgesamt 170 g 80%iger Schwefelsäure nach. Danach wäscht man mit Wasser neutral und trocknet bei 80°C.

Ausbeute: 63 g Tetrachlorperylimid mit einem Chlorgehalt von 26,9 %. Gehalt an 1,6,7,12-Tetrachlor-3,4,9,10-tetracarbonsäurediimid: 95,2 % (bestimmt durch HPLC-Analyse in Tetrahydrofuran auf einer Latek-Säule 250 × 4 C 18 GO/R5 µm und UV-Detektor bei 513 nm).

Nach röntgenographischer Analyse liegt das Produkt nur in der β-Modifikation vor; mittlere Teilchengröße 0,35 µm.

### Beispiel 2

50 g Perylentetracarbonsäurediimid werden bei Raumtemperatur in 640 g 100%iger Schwefelsäure gelöst. Nach Zugabe von 0,9 g NaJ werden bei 30°C innerhalb von 3 Stunden 30 g Chlor eingeleitet. Danach werden weitere 0,9 g NaJ zugegeben und anschließend in 3 Stunden 30 g Chlor eingeleitet. Danach werden nochmals 1 g NaJ zugesetzt und anschließend innerhalb von 4 Stunden 30 g Chlor eingeleitet. Danach entnimmt man dem Ansatz eine Probe, fällt sie auf Eiswasser, filtriert, wäscht mit Wasser und trocknet. Diese Probe hat einen Gesamtchlorgehalt von 27,0 % und enthält nach der HPLC-Analyse 77,0 % an der 1,6,7,12-Tetrachlorverbindung. Das Chlorierungsgemisch wird nun unter guter Kühlung und raschem Rühren innerhalb von 15 Minuten mit 160 g Wasser versetzt, dann auf 120°C erwärmt und 3 Stunden bei dieser Temperatur gehalten. Danach kühlt man auf 50°C, filtriert, wäscht in Portionen mit insgesamt 180 g 80%iger Schwefelsäure und zuletzt mit Wasser neutral. Nach dem Trocknen erhält man 62 g des Tetrachlorperylimidpigments mit einem Gehalt von 89 % an der 1,6,7,12-Tetrachlorverbindung. Das Pigment liegt ausschließlich in der β-Modifikation vor und hat im Mittel eine Teilchengröße von 0,4 µm.

### Beispiel 3

50 g Perylen 3,4,9,10-tetracarbonsäurediimid werden wie in Beispiel 1 chloriert.

Nach beendeter Chlorierung werden bei 30°C unter intensiver Kühlung innerhalb von 10 Min. 160 g Wasser (25°C) zugetropft. Anschließend wird auf 40°C erwärmt und 1 Stunde bei dieser Temperatur nachgerührt, dann auf 70°C erwärmt und 1 Stunde bei dieser Temperatur gehalten. Die Suspension wird abgesaugt und mit 170 g 80%iger Schwefelsäure in Portionen nachgewaschen. Danach wird das Pigment mit Wasser neutral gewaschen und bei 80°C getrocknet.

Ausbeute: 61 g Tetrachlorperylimid, das den gleichen Reinheitsgrad wie das nach Beispiel 1 erhaltene aufweist. Mittlere Teilchengröße: 0,1 µm.

### Beispiel 4

4.1) 50 g Perylen 3,4,9,10-tetracarbonsäurediimid werden wie in Beispiel 1 chloriert.
   Nach beendeter Chlorierung werden bei 70°C innerhalb von 30 Min. 160 g Wasser (25°C) zugetropft. Anschließend wird 1 Stunde nachgerührt. Die Suspension wird abgesaugt und in Portionen mit insgesamt 170 g 80%iger Schwefelsäure nachgewaschen. Danach wäscht man das Pigment mit Wasser neutral und trocknet bei 80°C.
   Ausbeute: 62 g Tetrachlorperylimid. Das Produkt besteht aus Teilchen zwischen 0,5 und 2,0 µm.
4.2) 40 g des erhaltenen Tetrachlorperylimids werden in einem 500 ml Achatbecher in einer Planetenmühle 8 Stunden gemahlen und anschließend von den Kugeln abgesiebt.
4.3) 30 g des Mahlguts werden in 300 g 80%iger Schwefelsäure eingetragen, auf 120°C erwärmt und 3 Stunden bei dieser Temperatur gerührt. Man läßt den Ansatz auf 60°C abkühlen, saugt das Pigment ab und wäscht mit 60 g 80%iger Schwefelsäure nach. Danach wird mit Wasser neutral gewaschen und bei 80°C getrocknet.
   Ausbeute: 27,5 g Tetrachlorperylentetracarbonsäurediimid mit einer Teilchengröße von etwa 0,2 µm.

### Anwendungsbeispiel 1

### 10%ige Volltoneinbrennlackierung

a) Volltonpaste (30%ig)
   3 Teile Farbstoff des Beispiels 1 werden mit 7 Teilen eines firnisähnlichen Bindemittels (z.B. Grinding Base 100S der Fa. Lawter Chemicals Inc., Chicago) auf einem Dreiwalzenstuhl mit 6 Passagen bei 10 bar zu einer Volltonpaste verarbeitet.
b) Die für die Färbung benutzte Volltonlackpaste (10%ig)
   2 Teile Volltonpaste gemäß a) werden mit 4 Teilen eines Bindemittelgemisches, bestehend aus 1 Teil eines mit Sojaöl modifizierten Alkydharzes, 2 Teilen eines mit synthetischer Fettsäure modifizierten Alkydharzes und 3 Teilen eines lösungsmittelfreien Melaminharzes vermischt.
c) Durchführung der Färbung
   Mit einem Filmziehgerät wird die Lackpaste gemäß b) auf Karton, auf dem schwarze Balken aufgedruckt sind, in einer Schichtdicke von 100 µ aufgetragen und 45 Minuten bei 120°C im Trockenschrank eingebrannt. Man erhält eine deckende und brillante rote Färbung mit ausgezeichneter Licht- und Wetterechtheit.

### Anwendungsbeispiel 2

### Einbrennlackierung im Verschnitt 1:20

a) Weißpaste (30%ig)
   42 Teile eines Bindemittels, erhalten durch Vermischen von 1 Teil eines mit Sojaöl modifizierten Alkydharzes und 2 Teilen eines mit synthetischer Fettsäure modifizierten Alkydharzes werden mit 30 Teilen Titandioxid (Rutilware), 22 Teilen eines lösungsmittelfreien Melaminharzes und 6 Teilen eines kolloidalen Siliziumdioxids auf einem Dreiwalzenstuhl bei 10 bar mit 6 Passagen zu einer 30%igen Weißpaste angerieben.
b) Für die Färbung benutzte Lackpaste
   0,5 Teile 30%ige Volltonpaste gemäß 1 a), wobei anstelle der 3 Teile Farbstoff des Beispiels 1 jetzt 3 Teile des Pigments des Beispiels 3 eingesetzt werden, und 10 Teile 30%ige Weißpaste gemäß a) werden auf einem Telleranreibegerät gemischt und verrieben.
c) Durchführung der Färbung
   Mit einem Filmabziehgerät wird die Lackpaste b) auf Karton mit einer Schichtdicke von 100 µ aufgetragen und 45 Minuten bei 120°C im Trockenschrank eingebrannt. Man erhält eine farbstarke, brillante, rote Färbung von sehr guter Licht- und Wetterechtheit.

### Anwendungsbeispiel 3

### Weich-PVC (0,1%ige Färbung)

0,05 Teile Farbstoff, erhalten nach Beispiel 2, werden mit 50 Teilen einer Mischung aus 65 Teilen PVC-Pulver, 36 Teilen Di-ethylhexyl-phthalat und 2 Teilen Dibutyl-Zinn-bis-thioglykolsäure-hexylester auf einem Mischwalzwerk bei 150°C - 160°C ca. 8 Minuten homogenisiert, zu Fellen gewalzt und auf einem Kalander-Walzwerk geglättet. Man erhält brillante, deckende, rot gefärbte Felle mit ausgezeichneter Lichtechtheit.

### Anwendungsbeispiel 4

### Polyethylen 0,05%ig

0,05 Teile Farbstoff, erhalten nach Beispiel 1, werden in einem Trommelmischer mit 100 Teilen Polyethylenpulver (Hochdruckware) trocken gemischt. Das Gemisch wird auf einer Schneckenpresse bei einer Zylindertemperatur von 160 bis 200°C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200°C zu Formkörpern verspritzt oder auf Pressen zu beliebigen Körpern gepreßt. Man erhält deckende, leuchtend rote Preßlinge mit hoher Lichtechtheit.

### Anwendungsbeispiel 5

### Polyethylen 1:10 (Verschnitt)

0,1 Teile Farbstoffe des Beispiels 4 werden mit 100 Teilen Polyethylenpulver (Hochdruckware) und 1 Teil Titandioxid (Rutilware) wie in Beispiel 4 angegeben, gemischt und zu Formkörpern verarbeitet. Man erhält farbstarke rote Preßlinge mit guter Lichtechtheit.

## Patentansprüche

1. Tetrachlorperylen-3,4,9,10-tetracarbonsäurediimidpigment, gekennzeichnet durch einen Gehalt von ≧ 85 Gew.% an der Tetrachlorverbindung der Formel 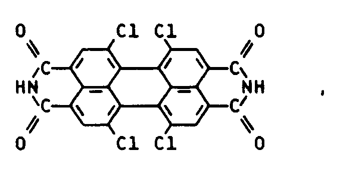 die zu ≧ 95 Gew.% in der β-Modifikation vorliegt und die im Röntgenspektrum Hauptlinien 2⊖ CuK_{α} bei 9,0, 13,3, 15,0, 16,8, 19,1, 21,5, 24,2, 25,4, 26,5, 27,0 und 27,5° aufweist.

2. Tetrachlorperylen-3,4,9,10-tetracarbonsäurediimidpigment gemäß Anspruch 1, dadurch gekennzeichnet, daß dieses ≦ 15 Gew.% an Diimid mit mehr als 4 und an Diimid mit 2 und 3 Chloratomen enthält, wobei der Anteil an Diimid mit mehr als 4 Chloratomen maximal 12 Gew.% betragen darf.

3. Tetrachlorperylen-3,4,9,10-tetracarbonsäurediimidpigment gemäß Anspruch 1 oder 2, dadurch gekennzeichnet, daß dieses im Mittel eine Teilchengröße von 0,15 bis 0,5 µm aufweist.

4. Tetrachlorperylen-3,4,9,10-tetracarbonsäurediimidpigment gemäß Anspruch 1 oder 2, dadurch gekennzeichnet, daß dieses im Mittel eine Teilchengröße von 0,2 bis 0,4 µm aufweist.

5. Verwendung des Tetrachlorperylen-3,4,9,10-tetracarbonsäurediimidpigments gemäß den Ansprüchen 1 bis 4 zum Färben von Lacken, Kunststoffen und Druckfarben.

## Claims

1. A tetrachloroperylene-3,4,9,10-tetracarboxylic acid diimide pigment which contains not less than 85% by weight of the tetrachloro compound of the formula 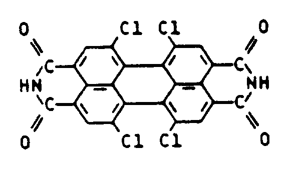 which is present to the extent of not less than 95% by weight in the β-modification and which, in an X-ray spectrum, exhibits 2^{⊖} CuK_{α} main lines at 9.0, 13.3, 15.0, 16.8, 19.1, 21.5, 24.2, 25.4, 26.5, 27.0 and 27.5°.

2. The tetrachloroperylene-3,4,9,10-tetracarboxylic acid diimide pigment as claimed in claim 1, which contains not more than 15% by weight of diimide with more than 4 chlorine atoms and diimide with 2 and 3 chlorine atoms, the content of diimide with more than 4 chlorine atoms being at most 12% by weight.

3. The tetrachloroperylene-3,4,9,10-tetracarboxylic acid diimide pigment as claimed in claim 1 or 2, which has a mean particle size of 0.15-0.5 µm.

4. The tetrachloroperylene-3,4,9,10-tetracarboxylic acid diimide pigment as claimed in claim 1 or 2, which has a mean particle size of 0.2-0.4 µm.

5. Use of the tetrachloroperylene-3,4,9,10-tetracarboxylic acid diimide pigment as claimed in claim 1 or 2 or 3 or 4 for coloring finishes, plastics and printing inks.

## Revendications

1. Pigment de diimide d'acide tétrachloropérylène-3,4,9,10-tétracarboxylique, caractérisé par une teneur de ≧ 85% en poids du composé tétrachloré de formule 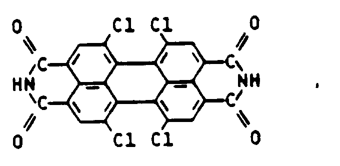 qui se présente, pour ≧ 95% en poids, sous la forme β et qui présente, dans le spectre X, des raies principales 28 CuK_{α} à 9,0, 13,3, 15,0, 16,8, 19,1, 21,5, 24,2, 25,4, 26,5, 27,0 et 27,5°.

2. Pigment de diimide d'acide tétrachloropérylène-3,4,9,10-tétracarboxylique selon la revendication 1, caractérisé en ce qu'il contient ≦ 15% en poids de diimide à plus de 4 atomes de chlore et de diimide à 2 et 3 atomes de chlore, la part de diimide à plus de 4 atomes de chlore devant s'élever au maximum à 12% en poids.

3. Pigment de diimide d'acide tétrachloropérylène-3,4,9,10-tétracarboxylique selon la revendication 1 ou 2, caractérisé en ce qu'il présente en moyenne une grosseur de particules de 0,15 à 0,5 µm.

4. Pigment de diimide d'acide tétrachloropérylène-3,4,9,10-tétracarboxylique selon la revendication 1 ou 2, caractérisé en ce qu'il présente en moyenne une grosseur de particules de 0,2 à 0,4 µm.

5. Utilisation du pigment de diimide d'acide tétrachloropérylène-3,4,9,10-tétracarboxylique selon l'une quelconque des revendications 1 à 4 pour la coloration de vernis, de matières plastiques et d'encres d'imprimerie.
